# EUROPEAN PATENT APPLICATION

(11) **EP 4 495 763 A1**
(43) Date of publication of application: **22.01.2025**
(21) Application number: 23186974.4
(22) Date of filing: 21.07.2023
(51) Int. Cl.: G06F 9/451, G06F 11/34

(54) **COMPUTER-IMPLEMENTED METHOD AND COMPUTER PROGRAM PRODUCT FOR PROCESSING DATA IN A COMMUNICATION SYSTEM AND COMMUNICATION SYSTEM**

(71) Applicant: Siemens Aktiengesellschaft, 80333 München (DE)
(72) Inventor: Calà, Ambra, 80639 München (DE); Elsner, Christoph, 91052 Erlangen (DE); Gupta, Rohit, 81379 München (DE); Regnat, Nikolaus, 81827 München (DE)
(74) Representative: Siemens Patent Attorneys

(57) **Abstract**

A computer-implemented method for processing data in a communication system including multiple individual entities, a primary system and an accompanying system is proposed. The method includes:
a) identifying a specific individual entity out of the multiple individual entities by means of an identification means,
b) receiving, by the accompanying system, specific interactions performed by the identified specific individual entity when interacting with the primary system of the communication system, wherein the specific interactions indicate how the identified specific individual entity has interacted with the primary system in dependence on a specific parameter or multiple specific parameters,
c) storing the received specific interactions and processing the stored received specific interactions for obtaining processed specific interactions,
d) providing entity-specific information based on the processed specific interactions to the primary system.

## Description

The present invention relates to a computer-implemented method and a computer program product for processing data in a communication system. Further, the present invention refers to a communication system for processing data.

Systems that have complex, software-based user interfaces often lack ease of use. New users (specific individual entities) particularly struggle when interacting with such systems and the components that belong to these systems. A lot of time and effort are spent to bring new users up to speed regarding efficiently working with such systems. Further, advanced users of such systems also require a need for constantly improving their expertise with the most up-to-date information that helps them effectively use new or upgraded functionalities in a system.

Thus, it is one object of the present invention to improve interactions by a specific individual entity with a primary system.

According to a first aspect, a computer-implemented method for processing data in a communication system including multiple individual entities, a primary system and an accompanying system is proposed. The method includes:
a) identifying a specific individual entity out of the multiple individual entities by means of an identification means,
b) receiving, by the accompanying system, specific interactions performed by the identified specific individual entity when interacting with the primary system of the communication system, wherein the specific interactions indicate how the identified specific individual entity has interacted with the primary system in dependence on a specific parameter or multiple specific parameters,
c) storing the received specific interactions and processing the stored received specific interactions for obtaining processed specific interactions,
d) providing entity-specific information based on the processed specific interactions to the primary system.

With the above-described computer-implemented method according to the first aspect, interactions by a specific individual entity with a primary system are improved by automatically providing the entity-specific information based on the processed specific interactions to the primary system and then to the identified specific individual entity. Prior to the processing, all specific interactions by the specific individual entity with the primary system are tracked, received and stored.

This has the technical effect that the identified specific individual entity, for example a user, interact much more efficiently with a user interface of the primary system as it provides a custom-tailored experience for each specific individual entity based on the received and stored specific interactions the identified specific individual entity has performed in the past. This custom-tailored experience can be embodied in form of self-explanatory suggestions in order to reduce the complexity of the user interface in a way to make it less overwhelming for the identified specific individual entity or to integrate some form of direct help or usage hints directly into the user interface. Further, this custom-tailored experience can be embodied in form of a tutorial integrated suggestion which provides training material and extensive documentation that explains how to interact with the system, its components, and its user interface to the identified specific individual entity.

Advantageously, this reduces training costs for new users while still allowing expert users to work with the full capabilities of the system's user interface.

In particular, a computer-implemented method is a method which utilizes a computer, a computer network or another programmable device, wherein one or multiple features are wholly or partially realized by means of a computer program. Specifically, the communication system can be embodied as an assistance system, in particular a driving assistance system, as an access system, in particular a vehicle access system, and/or as an identification system. Further, the communication system can be implemented within an automation plant or as an automation plant, wherein the automation plant can be a plant from the process industry, the chemical industry, the pharmaceutical industry, the petrochemical industry, from the mobility industry, such as a railroad control system, from the manufacturing and production industry or a plant from the food and beverage industry or the automation plant can be embodied an energy generation plant, such as e.g. a wind power plant, a solar power plant or a power plant and/or as a power distribution plant. Other embodiments of the communication system include telecommunication systems where specific suggestions can be provided at various system (or subsystem) points during the exchange of communication, for e.g., during relay of a message from a transmitter to a receiver. An optical communications network such as with fiber optics, can also be considered as a communication system, where data is transmitted through light signals.

Preferably, an individual entity of the multiple entities or the identified specific individual entity is a user or an operator of the primary system which uses the primary system for a specific purpose.

In particular, the primary system includes a specific component or multiple specific components, which can be implemented in hardware and/or software, with which the identified specific individual entity interacts. Further, the accompanying system or parts of the accompanying system can also be implemented in hardware and/or software. Preferably, the primary system is that system which receives as an input specific interactions by the identified specific individual entity. More preferably, the accompanying system is that system which receives as an input the received specific interactions by the primary system and processes this received specific interactions in order to provide entity-specific information back to the primary system.

Identification means include biometric data and/or login information.

Preferably, the step c) "storing the received specific interactions" means that the specific interactions of identified specific individual entity with the primary system are first received by the accompanying system, and then collected or tracked and then stored, in particular persistently stored.

The term "entity-specific information" can be referred to as feedback information for the primary system for the identified specific individual entity.

In particular, the specific suggestions are provided to the user interface of the primary system. Thus, a user can take a look at the user interface in order to see the provided specific suggestions. The user interface can be embodied as a screen or as a monitor.

According to an embodiment, step b) further includes prior to the receiving:
performing specific interactions, by the identified specific individual entity, with a user interface of the primary system, and
transmitting, by the primary system, the performed specific interactions to the accompanying system.

According to a further embodiment, the method further includes:
e) providing a specific suggestion or multiple specific suggestions based on the provided entity-specific information from the primary system to the identified specific individual entity.

According to a further embodiment, the specific suggestion or the multiple specific suggestions include a context-sensitive suggestion, a self-explanatory suggestion and/or a tutorial integrated suggestion.

Preferably, the specific suggestion or the multiple specific suggestions are provided only based on the processed specific interactions and are individual for the respective identified specific individual entity and its behavior with the user interface of the primary system. Therefore, the steps a) to e) can also be applied for multiple individual entities at the same time.

In other words, this embodiment provides an approach that identifies specific individual users and tracks how the specific individual users interacts with a primary systems user interface to provide a context-sensitive, self-explanatory and/or tutorial-integrated system.

In particular, a context-sensitive suggestion means that depending on a current state of the primary system, its specific components, and/or the knowledge of the identified specific individual entity (user), the currently available user-interface options can be custom-tailored to the identified specific individual entity. The primary system together with the accompanying system is able to understand and respond to the context of the user's actions in the primary system, providing relevant information and assistance based on the user's current situation or task.

For example, a self-explanatory suggestion includes a custom tailoring of the user interface to the identified specific individual entity and designing it to be easy to understand and use, with clear and intuitive interfaces and controls, e.g., removing all parts of the user interface that are not needed.

Further, the self-explanatory suggestion includes user interface elements that are highlighted if they are important for the identified specific individual entity.

Specifically, a tutorial integrated suggestion is a pop-up or a tooltip with helpful tips or instructions relating to a specific action (interaction) the identified specific individual entity is trying to perform with the primary system. Further, a tutorial integrated suggestion can include in-context tutorials or guided walkthroughs to help identified specific individual entities to learn how to use the primary system more effectively, that are especially helpful in mainly software environments.

According to a further embodiment, the received specific interactions indicate how the identified specific individual entity interacts with a user interface of the primary system and/or with a specific component of the primary system or multiple specific components of the primary system in dependence on the specific parameter or the multiple specific parameters.

Preferably, the user interface provides a bridge between the identified specific individual entity and the primary system. In particular, within the primary system, multiple specific components of the primary system can be accessed with data flows in the form of an application programming interface.

According to a further embodiment, the specific parameter or the multiple specific parameters include a component parameter, a user interface parameter, a support parameter and/or a tutorial parameter.

According to a further embodiment, the component parameter includes first component information indicating how often the identified specific individual entity has interacted with the specific component of the primary system, second component information indicating at what time intervals and/or at when specific timepoints the identified specific individual entity has interacted with the specific component of the primary system, third component information indicating in what order the identified specific individual entity has interacted with the multiple specific components of the primary system, fourth component information indicating a pause between two interactions of the multiple specific components of the primary system by the identified specific individual entity and/or fifth component information indicating those specific components of the primary system the identified specific individual entity has not interacted with.

In particular, the time intervals and the specific timepoints include a list of dates and times when the specific components of the primary system were accessed by the identified specific individual entity.

According to a further embodiment, the user interface parameter includes first user interface information indicating with which specific user interface elements of the user interface the identified specific individual entity has interacted with, second user interface information indicating at what time intervals and/or at when specific timepoints the identified specific individual entity has interacted with the specific user interface elements, third user interface information indicating in what order the identified specific individual entity has interacted with the specific user interface elements, fourth user interface information indicating a further pause between two interactions of the specific user interface elements by the identified specific individual entity and/or fifth user interface information indicating those specific user interface elements the identified specific individual entity has not interacted with.

Preferably, the first user interface information include a further list of user interface elements within the system the user has interacted with.

According to a further embodiment, the support parameter includes first support information indicating with which specific support documentations of the primary system the identified specific individual entity has interacted with, second support information indicating at what time intervals and/or at when specific timepoints the identified specific individual entity has interacted with the specific support documentations and/or third support information indicating those specific support documentations the identified specific individual entity has not interacted with.

According to a further embodiment, the tutorial parameter includes first tutorial information indicating with which specific tutorials of the primary system the identified specific individual entity has interacted with and/or second tutorial information indicating at what time intervals and/or at when specific timepoints the identified specific individual entity has interacted with the specific tutorials.

According to a further embodiment, the communication system further includes a data base for storing the received specific interactions, wherein the data base is part of the accompanying system or is arranged externally to the accompanying system in the communication system.

Preferably, the data base is a nonvolatile storage unit.

According to a further embodiment, the received specific interactions include direct interactions indicating at least a direct interaction by the identified specific individual entity with the primary system and/or indirect interactions indicating at least an indirect interaction by the identified specific individual entity with the primary system, wherein the at least one indirect interaction is an interaction, in which the identified specific individual entity interacts with the primary system and the primary system processes this interaction and provides this processed interaction for obtaining the at least one indirect interaction.

Any embodiment of the first aspect may be combined with any embodiment of the first aspect to obtain another embodiment of the first aspect.

According to a second aspect, a computer program product comprising a program code for executing the computer-implemented method according to the first aspect or embodiments of the first aspect when run on at least one computer is proposed.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a communication system for processing data including multiple individual entities, a primary system and an accompanying system is proposed. The communication system further includes:
an identification unit which is configured to identify a specific individual entity out of the multiple individual entities by means of an identification means, wherein the accompanying system is configured to:
receive specific interactions performed by the identified specific individual entity when interacting with the primary system of the communication system, wherein the specific interactions indicate how the identified specific individual entity has interacted with the primary system in dependence on a specific parameter or multiple specific parameters, wherein the communication system further includes:

a data base for storing the received specific interactions, wherein the accompanying system is further configured to:
process the stored received specific interactions for obtaining processed specific interactions, and
provide entity-specific information based on the processed specific interactions to the primary system.

The respective unit, e.g., the identification unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

According to an embodiment of the third aspect, the primary system includes a user interface, wherein the user interface is configured to provide a specific suggestion or multiple specific suggestions based on the provided entity-specific information to the identified specific individual entity.

According to a further embodiment of the third aspect, the specific suggestion or the multiple specific suggestions include a context-sensitive suggestion, a self-explanatory suggestion and/or a tutorial integrated suggestion, wherein the specific parameter or the multiple specific parameters include a component parameter, a user interface parameter, a support parameter and/or a tutorial parameter.

The technical effects and advantages described for the computer-implemented method according to the first aspect apply equally to the communication system according to the third aspect.

Further, embodiments and features described with reference to the computer-implemented method according to the first aspect apply mutatis mutandis to the communication system according to the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1: shows a schematic block diagram of a communication system for processing data according to an embodiment; and
- Fig. 2: shows a schematic flow chart of a computerimplemented method for processing data according to an embodiment.

In the Figures, like reference numerals designate like or functionally equivalent elements, unless otherwise indicated.

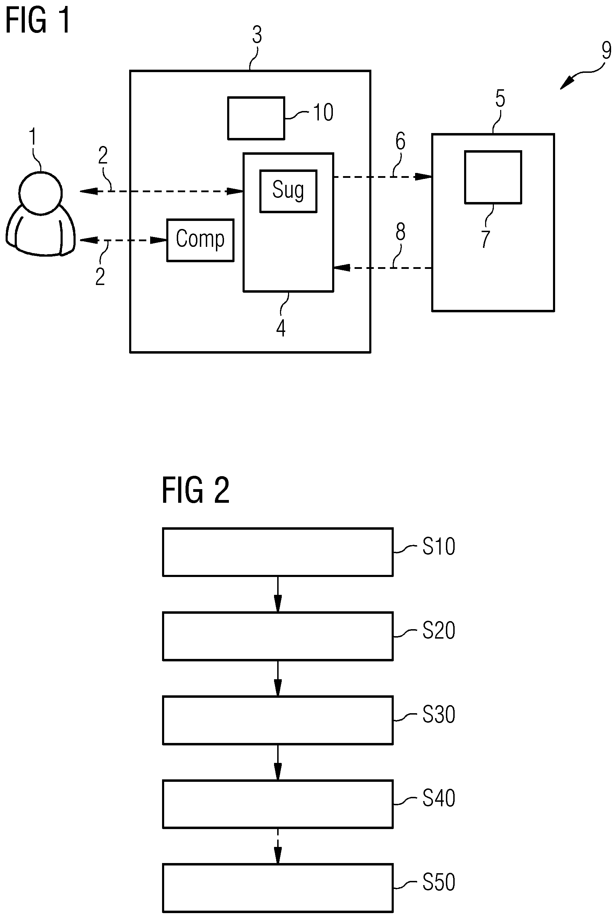

Fig. 1 shows a schematic block diagram of a communication system 9 for processing data including multiple individual entities (not shown), a primary system 3 and an accompanying system 5 according to an embodiment. Further, the communication system 9 includes an identification unit 10 which is in Fig. 1 part of the primary system 3 and a data base 7 which is in Fig. 1 part of the accompanying system 5. In embodiments not shown, the data base 7 is arranged externally to the accompanying system 5 in the communication system 9. In addition, references to the method steps of Fig. 2, which describes a computer-implemented method for processing data are indicated in parentheses in the following explanations of Fig. 1.

First, the identification unit 10 is configured to identify a specific individual entity 1 out of the multiple individual entities by means of an identification means (see also method step S10 of Fig. 2).

Then, the accompanying system 5 is configured to receive specific interactions 2 performed by the identified specific individual entity 1 when interacting with the primary system 3 of the communication system 9. The specific interactions 2 indicate how the identified specific individual entity 1 has interacted with the primary system 3 in dependence on a specific parameter or multiple specific parameters (see also method step S20 of Fig. 2). Moreover, the received specific interactions 6 indicate how the identified specific individual entity 1 interacts with a user interface 4 of the primary system 3 and with a specific component Comp of the primary system 3 or multiple specific components of the primary system 3 in dependence on the specific parameter or the multiple specific parameters.

In addition, the received specific interactions 6 include direct interactions indicating a direct interaction by the identified specific individual entity 1 with the primary system 3 and indirect interactions indicating an indirect interaction by the identified specific individual entity 1 with the primary system 3. The indirect interaction is an interaction, in which the identified specific individual entity 1 interacts with the primary system 3 and the primary system 3 processes this interaction and provides this processed interaction for obtaining the indirect interaction.

Next, the data base 7 is configured to store the received specific interactions 6 (see also method step S30 of Fig. 2).

Further, the accompanying system 5 is configured to process the stored received specific interactions 6 for obtaining processed specific interactions (see also method step S30 of Fig. 2) and to provide entity-specific information 8 based on the processed specific interactions to the primary system 3 (see also method step S40 of Fig. 2).

Subsequently, the user interface 4 is configured to provide a specific suggestion Sug or multiple specific suggestions (not shown) based on the provided entity-specific information 8 from the primary system 3 to the identified specific individual entity 1 (see also method step S50 of Fig. 2). The specific suggestion Sug or the multiple specific suggestions include a context-sensitive suggestion, a self-explanatory suggestion and/or a tutorial integrated suggestion.

In sum, the identified specific individual entity 1 is an individual user that interacts via specific interactions 2 with the user interface 4 of the primary system 3. Then, the accompanying system 5 tracks and stores all received specific interactions 6 of the individual user with the primary system 3. The stored interactions of the user are used to provide entity-specific information 8 in form of a context-sensitive, self-explanatory and/or tutorial-integrated suggestion Sug to the user interface 4.

Besides, the specific parameter or the multiple specific parameters include a component parameter, a user interface parameter, a support parameter and/or a tutorial parameter.

The component parameter includes first component information indicating how often the identified specific individual entity 1 has interacted with the specific component Comp of the primary system 3, second component information indicating at what time intervals and/or at when specific timepoints the identified specific individual entity 1 has interacted with the specific component Comp of the primary system 3, third component information indicating in what order the identified specific individual entity 1 has interacted with the multiple specific components of the primary system 3, fourth component information indicating a pause between two interactions of the multiple specific components of the primary system 3 by the identified specific individual entity 1 and/or fifth component information indicating those specific components of the primary system 3 the identified specific individual entity 1 has not interacted with.

Furthermore, the user interface parameter includes first user interface information indicating with which specific user interface elements of the user interface 4 the identified specific individual entity 1 has interacted with, second user interface information indicating at what time intervals and/or at when specific timepoints the identified specific individual entity 1 has interacted with the specific user interface elements, third user interface information indicating in what order the identified specific individual entity 1 has interacted with the specific user interface elements, fourth user interface information indicating a further pause between two interactions of the specific user interface elements by the identified specific individual entity 1 and/or fifth user interface information indicating those specific user interface elements the identified specific individual entity 1 has not interacted with.

In addition, the support parameter includes first support information indicating with which specific support documentations of the primary system 3 the identified specific individual entity 1 has interacted with, second support information indicating at what time intervals and/or at when specific timepoints the identified specific individual entity 1 has interacted with the specific support documentations and/or third support information indicating those specific support documentations the identified specific individual entity 1 has not interacted with.

Moreover, the tutorial parameter includes first tutorial information indicating with which specific tutorials of the primary system 3 the identified specific individual entity 1 has interacted with and/or second tutorial information indicating at what time intervals and/or at when specific timepoints the identified specific individual entity 1 has interacted with the specific tutorials.

In the following, a first and a second application example of the communication system 9 according to Fig. 1 are explained in detail:

### First application example

If a user (corresponds to the identified specific individual entity 1) has turned on (corresponds to the specific interaction 2) the windscreen wiper (corresponds to a specific component Comp) of a car (corresponds to the primary system 3) when it is not raining outside, then the accompanying system 5 will detect the following by means of the received specific interactions 6:
By a rain sensor component (corresponds also to a specific component Comp of the multiple specific components of the primary system 3) of the primary system: It is not raining outside.

By a driver identification component (corresponds also to a specific component Comp of the multiple specific components of the primary system 3) of the primary system: Car key is inserted, and car is in drive mode.

By a windscreen component (corresponds also to a specific component Comp of the multiple specific components of the primary system 3) of the primary system: The windscreen wiper was turned on.

Therefore, based on these three component parameters (rain sensor component, driver identification component and windscreen component), the accompanying system 6 provides entity-specific information 8 to the primary system 3.

In this case, the suggestion Sug provided by the primary system 3 to the identified specific individual entity via the user interface 4 is:
An additional warning blinker (and possibly sound) in the car's dashboard component must be turned on that suggests the windscreen may have been accidentally turned on.

This is an example of a context-sensitive suggestion.

### Second application example

The primary system 3 can be a computer used by the identified specific individual entity 1 (user) to access a software-based user interface 4 of the primary system 3. The user can provide input (i.e., identity information (identification means) and any specific interaction 2 with the primary system 3) to the primary system 3 using an input device such as a keyboard and a mouse. The primary system 3 will provide the output, i.e., the custom-tailored user interface 4, based on the entity-specific information 8 to the user through an output device such as a monitor screen (not shown) of the primary system 3.

If the user is currently designing a model of a computer, then the accompanying system 5 will calculate the following:
i) First, the accompanying system 5 identifies the user (through login information provided by the primary system to the accompanying system 5).
ii) Retrieve a current state of the computer model from the data base 7.
iii) Calculate missing parts of the computer model into a list.
iv) Prioritize this list of parts based on either:
   a) the importance of the part in a computer (e.g., there should be an output device if an input device is already modelled), or
   b) other users that have modelled a computer in the past (in this case, the list would include the next parts that were previously modelled by the other users).

Thus, based on the current state of the model, the missing parts and the prioritized list, the accompanying system 5 provides entity-specific information 8 to the primary system 3.

In this case, the suggestion Sug provided by the primary system 3 to the identified specific individual entity 1 via the user interface 4 is:
The next part of a computer to be modelled from this list.

Then, the primary system 3, through its user interface 4 such as a monitor screen, displays this suggestion Sug to the user and is therefore tailored according to the context of the primary system 3 in consideration.

Fig. 2 shows a schematic flow chart of the computer-implemented method for processing data in a communication system 9 (see Fig. 1) including multiple individual entities, a primary system 3 (see Fig. 1) and an accompanying system 5 (see Fig. 1) according to an embodiment. The respective method steps S10 - S40 of the computer-implemented method have already been explained above in terms of Fig. 1, which is why, in order to avoid repetitions, the method steps S10 - S40 are not explained again. Further, embodiments of the computer-implemented method of Fig. 2 include the method step S50, which is why method step S50 is connected with the method steps S10 - S40 in Fig. 2 with a respective dotted line. Also, method step S50 has already explained in Fig. 1.

Although the present invention has been described in accordance with preferred embodiments, it is obvious for the person skilled in the art that modifications are possible in all embodiments.

### Reference Numerals:

- 1: identified specific individual entity
- 2: specific interactions
- 3: primary system
- 4: user interface
- 5: accompanying system
- 6: received specific interactions
- 7: data base
- 8: provided entity-specific information
- 9: communication system
- 10: identification unit

- Comp: specific component
- S10 - S50: method steps
- Sug: specific suggestion

## Claims

1. A computer-implemented method for processing data in a communication system (9) including multiple individual entities, a primary system (3) and an accompanying system (5), the method including:
a) identifying (S10) a specific individual entity (1) out of the multiple individual entities by means of an identification means,
b) receiving (S20), by the accompanying system (5), specific interactions (2) performed by the identified specific individual entity (1) when interacting with the primary system (3) of the communication system (9), wherein the specific interactions (2) indicate how the identified specific individual entity (1) has interacted with the primary system (3) in dependence on a specific parameter or multiple specific parameters,
c) storing (S30) the received specific interactions (6) and processing the stored received specific interactions (6) for obtaining processed specific interactions,
d) providing (S40) entity-specific information (8) based on the processed specific interactions to the primary system (3) .

2. The method according to claim 1,
**characterized by**:
e) providing (S50) a specific suggestion (Sug) or multiple specific suggestions based on the provided entity-specific information (8) from the primary system (3) to the identified specific individual entity (1).

3. The method according to claim 1 or 2,
**characterized in**
**that** the specific suggestion (Sug) or the multiple specific suggestions include a context-sensitive suggestion, a self-explanatory suggestion and/or a tutorial integrated suggestion.

4. The method according to one of claims 1 - 3,
**characterized in**
**that** the received specific interactions (6) indicate how the identified specific individual entity (1) interacts with a user interface (4) of the primary system (3) and/or with a specific component (Comp) of the primary system (3) or multiple specific components of the primary system (3) in dependence on the specific parameter or the multiple specific parameters.

5. The method according to claim 4,
**characterized in**
**that** the specific parameter or the multiple specific parameters include a component parameter, a user interface parameter, a support parameter and/or a tutorial parameter.

6. The method according to claim 5,
**characterized in**
**that** the component parameter includes first component information indicating how often the identified specific individual entity (1) has interacted with the specific component (Comp) of the primary system (3), second component information indicating at what time intervals and/or at when specific timepoints the identified specific individual entity (1) has interacted with the specific component (Comp) of the primary system (3), third component information indicating in what order the identified specific individual entity (1) has interacted with the multiple specific components of the primary system (3), fourth component information indicating a pause between two interactions of the multiple specific components of the primary system (3) by the identified specific individual entity (1) and/or fifth component information indicating those specific components of the primary system (3) the identified specific individual entity (1) has not interacted with.

7. The method according to claim 5 or 6,
**characterized in**
**that** the user interface parameter includes first user interface information indicating with which specific user interface elements of the user interface (4) the identified specific individual entity (1) has interacted with, second user interface information indicating at what time intervals and/or at when specific timepoints the identified specific individual entity (1) has interacted with the specific user interface elements, third user interface information indicating in what order the identified specific individual entity (1) has interacted with the specific user interface elements, fourth user interface information indicating a further pause between two interactions of the specific user interface elements by the identified specific individual entity (1) and/or fifth user interface information indicating those specific user interface elements the identified specific individual entity (1) has not interacted with.

8. The method according to one of claims 5 - 7,
**characterized in**
**that** the support parameter includes first support information indicating with which specific support documentations of the primary system (3) the identified specific individual entity (1) has interacted with, second support information indicating at what time intervals and/or at when specific timepoints the identified specific individual entity (1) has interacted with the specific support documentations and/or third support information indicating those specific support documentations the identified specific individual entity (1) has not interacted with.

9. The method according to one of claims 5 - 8,
**characterized in**
**that** the tutorial parameter includes first tutorial information indicating with which specific tutorials of the primary system (3) the identified specific individual entity (1) has interacted with and/or second tutorial information indicating at what time intervals and/or at when specific timepoints the identified specific individual entity (1) has interacted with the specific tutorials.

10. The method according to one of claims 1 - 9,
**characterized in**
**that** the communication system (9) further includes a data base (7) for storing the received specific interactions (6), wherein the data base (7) is part of the accompanying system (5) or is arranged externally to the accompanying system (5) in the communication system (9).

11. The method according to one of claims 1 - 10,
**characterized in**
**that** the received specific interactions (6) include direct interactions indicating at least a direct interaction by the identified specific individual entity (1) with the primary system (3) and/or indirect interactions indicating at least an indirect interaction by the identified specific individual entity (1) with the primary system (3), wherein the at least one indirect interaction is an interaction, in which the identified specific individual entity (1) interacts with the primary system (3) and the primary system (3) processes this interaction and provides this processed interaction for obtaining the at least one indirect interaction.

12. A computer program product comprising a program code for executing the computer-implemented method according to one of claims 1 - 11 when run on at least one computer.

13. A communication system (9) for processing data including multiple individual entities, a primary system (3) and an accompanying system (5), wherein the communication system (9) further includes:
an identification unit (10) which is configured to identify a specific individual entity (1) out of the multiple individual entities by means of an identification means, wherein the accompanying system (5) is configured to:
receive specific interactions (2) performed by the identified specific individual entity (1) when interacting with the primary system (3) of the communication system (9), wherein the specific interactions (2) indicate how the identified specific individual entity (1) has interacted with the primary system (3) in dependence on a specific parameter or multiple specific parameters, wherein the communication system (9) further includes:
a data base (7) for storing the received specific interactions (6), wherein the accompanying system (5) is further configured to:
process the stored received specific interactions (6) for obtaining processed specific interactions, and
provide entity-specific information (8) based on the processed specific interactions to the primary system (3).

14. The system according to claim 13,
**characterized in**
**that** the primary system (3) includes a user interface (4), wherein the user interface (4) is configured to provide a specific suggestion (Sug) or multiple specific suggestions based on the provided entity-specific information (8) to the identified specific individual entity (1).

15. The system according to claim 13 or 14,
**characterized in**
**that** the specific suggestion (Sug) or the multiple specific suggestions include a context-sensitive suggestion, a self-explanatory suggestion and/or a tutorial integrated suggestion, wherein the specific parameter or the multiple specific parameters include a component parameter, a user interface parameter, a support parameter and/or a tutorial parameter.
